# EUROPÄISCHE PATENTSCHRIFT

(11) **EP 3 513 486 B1**
(45) Veröffentlichungstag und Bekanntmachung des Hinweises auf die Patenterteilung: **27.10.2021**
(21) Anmeldenummer: 18765380.3
(22) Anmeldetag: 24.08.2018
(51) Int. Cl.: H02K 9/06, H02K 11/33, F04D 17/16, F04D 25/16

(54) **ELEKTROMOTOR MIT VERBESSERTER MOTORKÜHLUNG ZUM ANTRIEB EINES LÜFTERS**
ELECTRIC MOTOR HAVING IMPROVED MOTOR COOLING FOR DRIVING A FAN
MOTEUR ÉLECTRIQUE À REFROIDISSEMENT AMÉLIORÉ POUR ENTRAÎNER UN VENTILATEUR

(30) Priorität: 27.09.2017 DE 102017122494
(43) Veröffentlichungstag der Anmeldung: 24.07.2019
(73) Patentinhaber: EBM-PAPST Landshut GmbH, 84030 Landshut (DE)
(72) Erfinder: KOPPER, Jan, 84028 Landshut (DE); KNEIP, Sven, 85417 Marzling (DE)
(74) Vertreter: Staeger & Sperling Partnerschaftsgesellschaft mbB
(86) Internationale Anmeldenummer: PCT/EP2018/072931
(87) Internationale Veröffentlichungsnummer: WO 2019/063219

(56) Entgegenhaltungen:
- EP-A1- 2 466 147
- WO-A1-2004/013944
- DE-A1-102015 114 920
- DE-U1-202008 015 895
- FR-A1- 2 908 941
- JP-A- H1 189 181
- JP-A- 2017 055 660
- US-A- 5 793 131
- US-A1- 2011 100 253
- US-A1- 2013 320 786

## Beschreibung

Die Erfindung betrifft einen Elektromotor, insbesondere ausgebildet als Innenläufermotor, mit verbesserter Motorkühlung. Der Elektromotor dient vornehmlich zum Antrieb eines Lüfters.

Aus dem Stand der Technik ist eine Vielzahl von Elektromotoren zum Antrieb von Lüftern bzw. Ventilatoren bekannt. Bei den Innenläufermotoren ist aufgrund des meist sehr kompakten Aufbaus stets auf eine ausreichende Kühlung zu achten, um die gewünschte Leistung bei gleichzeitig hoher Langlebigkeit zu gewährleisten. Häufig ist die Wicklungstemperatur am Stator hierbei der die Maximalleistung begrenzende Parameter. Bei einer Reduzierung der Wicklungstemperatur kann mithin die Maximalleistung des Elektromotors bei identischer Drehzahl erhöht werden.

Die Druckschrift DE102015114920 offenbart einen Elektromotor mit den Merkmalen aus der Präambel des unabhängigen Anspruchs 1.

Der Erfindung liegt deshalb die Aufgabe zugrunde, einen Elektromotor bereit zu stellen, dessen Stator beziehungsweise dessen Wicklungen am Stator während des Betriebs des Elektromotors gekühlt werden, um die Maximalleistung des Elektromotors bei konstanter Drehzahl zu erhöhen.

Diese Aufgabe wird durch die Merkmalskombination gemäß Patentanspruch 1 gelöst.

Erfindungsgemäß wird ein Elektromotor, insbesondere Innenläufermotor, zum Antrieb eines Lüfters mit einem Stator, einem Rotor, einer Antriebswelle, einer auf einer ersten axialen Seite des Stators angeordneten Motorelektronik und einem ersten Kühllaufrad vorgeschlagen. Das erste Kühllaufrad ist der Motorelektronik zugeordnet auf der ersten axialen Seite des Stators auf der Antriebswelle angeordnet und erzeugt im Betrieb des Elektromotors einen ersten Kühlluftstrom zumindest zu der Motorelektronik. Ferner umfasst der Elektromotor ein zweites Kühllaufrad, das unmittelbar angrenzend zum Stator auf einer zweiten axialen Seite des Stators, die der ersten axialen Seite gegenüberliegt, angeordnet ist. Das zweite Kühllaufrad weist Laufradschaufeln auf, die im Betrieb des Elektromotors einen zweiten Kühlluftstrom zumindest in axialer Richtung entlang des Stators erzeugen.

Die Verwendung von zwei axial dem Stator und Rotor gegenüberliegenden Kühlrädern ermöglicht die aktive Kühlung sowohl der Motorelektronik als auch des Rotors und Stators, der die Blechpakete und Wicklungen aufweist. Der durch das erste Kühllaufrad erzeugte radiale erste Kühlluftstrom strömt insbesondere entlang der auf einer Leiterplatte angeordneten Motorelektronik sowie entlang der an die Leiterplatte angrenzenden axialen Außenfläche des Rotors und Stators. Der durch das zweite Kühllaufrad erzeugte axiale zweite Kühlluftstrom verläuft vorzugsweise entlang der Innenmantelfläche des Stators und wird radial außenseitig an den Wicklungen des Stators abgeblasen.

Zwischen dem Stator und dem Rotor ist vorteilhafterweise ein Kühlspalt ausgebildet, durch den das zweite Kühllaufrad den zweiten Kühlluftstrom saugt. Das zweite Kühllaufrad wird hierzu als Radiallaufrad ausgebildet. Der Kühlluftstrom kann somit zweifach, d.h. innen- und außenseitig während des Saugens und Ausblasens kühlend auf Komponenten des Stators einwirken. Die Reduzierung der Statortemperatur bzw. der Wicklungstemperatur am Stator durch das Vorsehen von zwei axial gegenüberliegenden Kühllaufrädern erlaubt eine höhere Maximalleistung bei gleicher Drehzahl und mithin eine erhöhte Leistungsausbeute. In ihrer Dimension größer bauende Motoren können durch einen Elektromotor der vorliegenden Offenbarung ersetzt werden. Ferner wird durch die effektive Kühlung die Lebensdauer des Motors erhöht.

Als Vergleichswerte erreicht eine erfindungsgemäße Ausführung mit erstem und zweitem Kühllaufrad bei einem Betrieb in Raumtemperatur und gleichen Rahmenbedingungen eine Temperaturreduzierung der Wicklungstemperatur von 50% gegenüber einer Ausführung mit nur dem ersten Kühllaufrad und von 85% gegenüber einer Ausführung ganz ohne erstes und zweites Kühllaufrad.

Eine vorteilhafte kompakte Ausführung des Elektromotors sieht vor, dass das zweite Kühllaufrad einteilig mit dem Rotor verbunden ist. Die Verbindung wird entweder durch Verkleben oder durch Verpressen des zweiten Kühllaufrads an dem bzw. mit dem Magneten des Rotors erreicht. Dadurch ergibt sich der Antrieb des zweiten Kühllaufrads über die Rotation des Rotors. Eine zusätzliche Anbindung an die Antriebswelle ist möglich, jedoch nicht nötig.

Erfindungsgemäß ist in axialer Richtung an das zweite Kühllaufrad angrenzend und auf der zum Stator gegenüberliegenden axialen Seite eine Lagerung der Antriebswelle vorgesehen. Die Lagerung der Antriebswelle wird vorzugsweise ausschließlich axial einseitig gegenüber dem Stator vorgesehen. Auf der zweiten axialen Seite des Stators kann somit unmittelbar angrenzend das erste Kühllaufrad auf der Antriebswelle positioniert werden und einen ersten Kühlluftstrom zur Motorelektronik, aber auch entlang einer axialen Außenfläche des Stators und Rotors erzeugen. Auf eine zusätzliche Lagerung auf der axialen Seite des ersten Kühllaufrads kann verzichtet werden.

Erfindungsgemäß erfolgt die Lagerung des Elektromotors durch mindestens ein in einen Lagerschild integriertes Antriebswellenlager. Vorzugsweise werden jedoch mindestens zwei Antriebswellenlager verwendet, die beide in dem Lagerschild integral aufgenommen und in axialer Richtung zueinander beabstandet sind.

In einer weiteren Ausbildung des Elektromotors ist vorgesehen, dass der Lagerschild einen Aufnahmeraum aufweist, in dem das zweite Kühllaufrad aufgenommen ist und innerhalb dessen es im Betrieb rotiert und den zweiten Kühlluftstrom erzeugt. Die Integration des zweiten Kühllaufrads in den Aufnahmeraum des Lagerschilds führt zu einem vorteilhaften kompakten axialen Gesamtaufbau des Elektromotors. Diesbezüglich ist ferner eine Ausführung günstig, bei der das zweite Kühllaufrad einen Nabenabschnitt aufweist, der das mindestens eine Antriebswellenlager in axialer Richtung umschließt. Das bedeutet, dass das Antriebswellenlager in einer Axialebene mit dem zweiten Kühllaufrad angeordnet werden kann und sich der axiale Bauraumbedarf nicht vergrößert.

Erfindungsgemäß ist vorgesehen, dass zwischen dem Lagerschild und dem Stator ein umlaufender Austrittsspalt ausgebildet ist, über den im Betrieb des Elektromotors der zweite Kühlluftstrom nach radial außen förderbar und in die Umgebung ableitbar ist. Die von dem Stator an den Kühlluftstrom abgegebene Wärme kann somit zielgerichtet und ohne relevante Strömungsverluste an die Umgebung abgegeben werden.

Eine Weiterbildung des Elektromotors ist dadurch gekennzeichnet, dass der Aufnahmeraum des Lagerschilds und das zweite Kühllaufrad eine zueinander entsprechende Form aufweisen. Das bedeutet, dass sich eine zu dem zweiten Kühllaufrad weisende Wand des Aufnahmeraums im Wesentlichen parallel zu dem zweiten Kühllaufrad erstreckt, so dass ein Axialspalt zwischen dem Lagerschild und dem zweiten Kühllaufrad konstant ist.

Das zweite Kühllaufrad weist in einem Ausführungsbeispiel einen radialen Randabschnitt auf, der in axialer Richtung zum Stator hin geneigt ausgebildet ist. Eine Formgebung des zweiten Kühllaufrads kann somit entsprechend einer Form des Stators ausgebildet werden, um in axialer Richtung vorspringende Elemente des Stators über die Form des zweiten Kühllaufrads auszugleichen. Ein zwischen dem Stator und dem zweiten Kühllaufrad bzw. den Laufradschaufeln des zweiten Kühllaufrads festgelegter Spalt ist mithin konstant. Zudem kann über die Form des Aufnahmeraums und dessen Wand die Strömung des zweiten Kühllaufrads geleitet werden, beispielsweise in Richtung des umlaufenden Austrittsspalts zwischen Stator und Lagerschild.

Als vorteilhafte Ausführung bezüglich der Dimensionierung des zweite Kühllaufrads gegenüber dem Stator hat sich herausgestellt, dass das zweite Kühllaufrad vorteilhafterweise einen Durchmesser D2 aufweist, der gegenüber einem Statoraußendurchmesser DS des Stators ausgebildet ist, dass gilt 0,9D2 ≤ DS ≤ 1,1D2. Das bedeutet, dass der Stator und das zweite Kühllaufrad im Wesentlichen denselben Außendurchmesser aufweisen.

Ferner ist eine Ausführung günstig, bei der das erste Kühllaufrad einen Außendurchmesser D1 aufweist, der gegenüber einem Rotoraußendurchmesser DR des Rotors ausgebildet ist, dass gilt 0,6D1 ≤ DR ≤ 1,1D1. Die Dimensionierung der Kühllaufräder ist ferner vorteilhaft, wenn das zweite Kühllaufrad einen Außendurchmesser D2 aufweist, der gegenüber einem Außendurchmesser D1 des ersten Kühllaufrads ausgebildet ist, dass gilt 0,3D2 ≤ D1 ≤ 0,7D2. Wenn das erste Kühllaufrad mit entsprechend geringem Außendurchmesser ausgebildet wird, kann es abschnittsweise radial innerhalb des Stators positioniert werden, wodurch sich der benötigte axiale Bauraum verringert und die kompakte Bauweise des Elektromotors begünstigt ist.

Als vorteilhafte Ausführung sind die Laufradschaufeln des zweiten Kühllaufrads gegenüber der Drehrichtung des Elektromotors rückwärtsgekrümmt ausgebildet und erhöhen mithin die Kühlleitung des zweiten Kühllaufrads. Als vorteilhafte Anzahl für Laufradschaufeln hat sich ein Bereich von 15-25, insbesondere 17-23, weiter bevorzugt 19-21 Laufradschaufeln herausgestellt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine seitliche Schnittansicht eines Ausführungsbeispiels eines Elektromotors;
- Fig. 2: eine perspektivische Ansicht eines Ausführungsbeispiels des zweiten Kühllaufrads aus dem Elektromotor aus Fig. 1.
Gleiche Bezugszeichen benennen gleiche Teile in allen Ansichten.

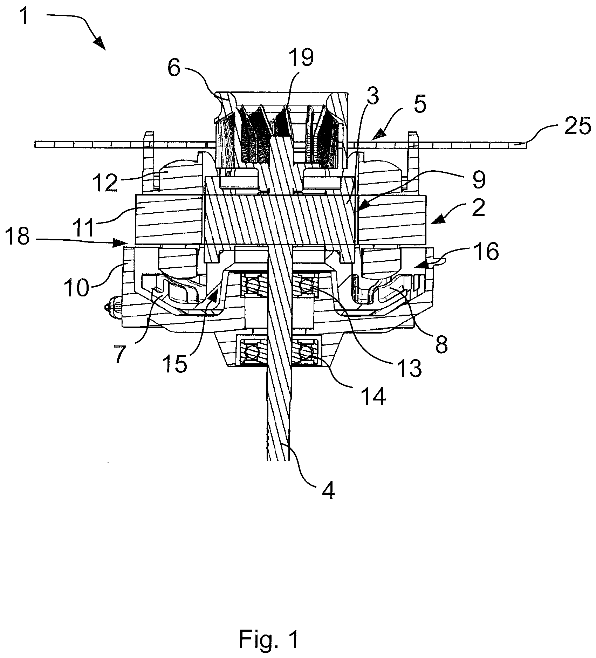

In Figur 1 ist ein Ausführungsbeispiel eines Elektromotors 1 in seitlicher Schnittansicht dargestellt. Der Elektromotor 1 ist als Innenläufermotor mit einem auf der sich in Axialrichtung erstreckenden Antriebswelle 4 angeordneten Rotor 3 und einem den Rotor 3 umschließenden Stator 2 ausgebildet. Der Stator 2 umfasst die Blechpakete 11 und die Wicklungen 12. Auf der ersten axialen Seite des Stators 2 ist auf der Antriebswelle 4 das erste Kühllaufrad 6 mit in einem Schaufelkranz angeordneten Schaufeln 19 positioniert. In einer Axialebene mit dem ersten Kühllaufrad 6 erstreckt sich die Leiterplatte 25 mit der darauf angeordneten Motorelektronik 5. Das erste Kühllaufrad 6 saugt einen ersten Kühlluftstrom axial von oben an und bläst ihn radial über die Leiterplatte 25 und eine axiale Oberfläche des Rotors 3 und Stators 2 hinweg aus. Der Außendurchmesser des ersten Kühllaufrads 6 ist kleiner als der Innendurchmesser des Stators 2, so dass das erste Kühllaufrad 6 abschnittsweise axial in den Stator 2 eingesetzt und teilweise von dem Rotor 3 umschlossen ist.

Auf der zum Stator 2 gegenüberliegenden zweiten axialen Seite ist unmittelbar angrenzend zu den Wicklungen 12 des Stators 2 auf der Antriebswelle 4 das zweite Kühllaufrad 7 positioniert und mit dem Rotor 3 verbunden. In axialer Richtung anschließend weist der Elektromotor 1 den Lagerschild 10 mit den zwei darin integriert aufgenommenen und axial beabstandet angeordneten Antriebswellenlagern 13, 14 auf, welche die Antriebswelle 4 einseitig zweifach lagern. Der Lagerschild 10 erstreck sich in radialer Richtung bis über den Stator 2 hinaus und bildet einen Aufnahmeraum 16, in dem das zweite Kühllaufrad 7 vollständig aufgenommen ist, im Betrieb des Elektromotors 1 rotiert und über seine rückwärtsgekrümmten Laufradschaufeln 8 den zweiten Kühlluftstrom in axialer Richtung entlang der inneren Mantelfläche des Stators 2 erzeugt. Der zweite Kühlluftstrom wird in axialer Richtung entlang dem zwischen dem Rotor sowie dem Blechpaket 11 und den Wicklungen 12 des Stators 2 vorgesehenen Kühlspalt 9 gesaugt und über den zwischen dem Stator 2 und dem Lagerschild 10 vorgesehenen umlaufenden Austrittsspalt 18 ausgeblasen. Die Wand des Aufnahmeraums 16 trägt dazu bei, den Kühlluftstrom zu dem Austrittsspalt 18 zu leiten.

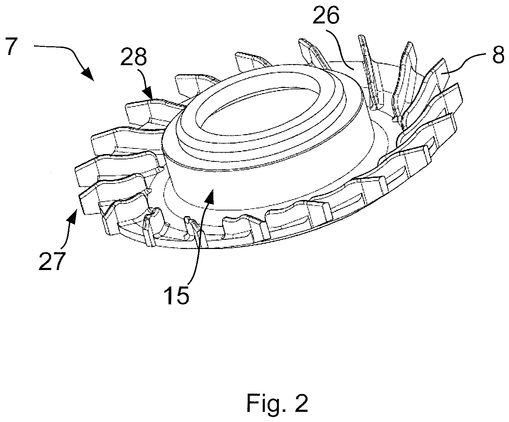

Bezugnehmend auch auf Figur 2, in der das zweite Kühllaufrad 7 in einer perspektivischen Ansicht dargestellt ist, umfasst das zweite Kühllaufrad 7 in dem sich um die Antriebswelle 4 erstreckenden Bereich den Nabenabschnitt 15, der axial eingesenkt ausgebildet ist und das obere Antriebswellenlager 13 in axialer Richtung umschließt, so dass der Nabenabschnitt 15 und das Antriebswellenlager 13 innerhalb einer Axialebene verlaufen. In den sich an den Nabenabschnitt 15 angrenzenden Mittelabschnitt erstreckt sich das zweite Kühllaufrad 7 geradlinig nach radial auswärts. Der radiale Randabschnitt ist in axialer Richtung zu den Wicklungen 12 des Stators 2 hin geneigt ausgebildet. Die Form des Aufnahmeraums 16 des Lagerschilds 10 entspricht der Formgebung des zweiten Kühllaufrads 7, so dass ein Axialspalt zwischen dem Lagerschild 10 und dem zweiten Kühllaufrad 7 über die Erstreckung nach radial außen konstant ist.

Das zweite Kühllaufrad 7 weist in der gezeigten Ausführung einen Außendurchmesser auf, der im Wesentlichen demjenigen des Stators 2 entspricht, jedoch doppelt so groß ist wie der Außendurchmesser des ersten Kühllaufrads 6.

Das zweite Kühllaufrad 7 gemäß Figur 2 ist mit einer Bodenscheibe 26 ausgebildet. Die neunzehn rückwärtsgekrümmten Laufradschaufeln 8 haben jeweils dieselbe Form, wobei ihre jeweils freie axiale Stirnkante 28 unterschiedliche Steigungen aufweist und an eine Außenkontur der Wicklungen 12 des Stators 2 angepasst sind, dass der Abstand zwischen den Wicklungen 12 und der axialen Stirnkanten 28 konstant ist. Die radialen Außenkanten 27 der Laufradschaufeln 8 stehen über einen Umfangsrand der Bodenscheibe 26 nach radial außen hervor. Radial innenseitig sind die Laufradschaufeln 8 zu dem Nabenabschnitt 15 beabstandet.

## Patentansprüche

1. Elektromotor (1), ausgebildet als Innenläufermotor, zum Antrieb eines Lüfters mit
einem Stator (2),
einem Rotor (3),
einer Antriebswelle (4),
einer auf einer ersten axialen Seite des Stators (2) angeordneten Motorelektronik (5),
einem ersten Kühllaufrad (6), das der Motorelektronik (5) zugeordnet auf der ersten axialen Seite des Stators (2) auf der Antriebswelle (4) angeordnet ist und im Betrieb des Elektromotors (1) einen ersten Kühlluftstrom zumindest zu der Motorelektronik (5) erzeugt, und
einem zweiten Kühllaufrad (7), das unmittelbar angrenzend zu Wicklungen (12) des Stators (2) auf einer zweiten axialen Seite des Stators (2), die der ersten axialen Seite gegenüberliegt, angeordnet ist und Laufradschaufeln (8) aufweist, die im Betrieb des Elektromotors (1) einen zweiten Kühlluftstrom zumindest in axialer Richtung entlang des Stators (2) erzeugen, wobei in axialer Richtung an das zweite Kühllaufrad (7) angrenzend eine Lagerung der Antriebswelle (4) vorgesehen ist, wobei die Lagerung mindestens ein in einen Lagerschild (10) integriertes Antriebswellenlager (13, 14) umfasst, und wobei sich der Lagerschild (10) in radialer Richtung bis über den Stator (2) hinaus erstreckt, **dadurch gekennzeichnet, dass** in axialer Richtung zwischen dem Lagerschild (10) und dem Blechpaket (11) des Stators (2) ein umlaufender Austrittsspalt (18) ausgebildet ist, über den im Betrieb des Elektromotors (1) der zweite Kühlluftstrom nach radial außen förderbar ist.

2. Elektromotor nach Anspruch 1, **dadurch gekennzeichnet, dass** das zweite Kühllaufrad (7) einteilig mit dem Rotor (3) verbunden ist.

3. Elektromotor nach Anspruch 1 oder 2, **dadurch gekennzeichnet, dass** das zwischen dem Stator (2) und dem Rotor (3) ein Kühlspalt (9) ausgebildet ist, durch den das als Radiallaufrad ausgebildete zweite Kühllaufrad (7) den zweiten Kühlluftstrom saugt.

4. Elektromotor nach Anspruch 1, **dadurch gekennzeichnet, dass** die Lagerung ausschließlich axial einseitig gegenüber dem Stator (2) vorgesehen ist.

5. Elektromotor nach Anspruch 1, **dadurch gekennzeichnet, dass** der Lagerschild (10) einen Aufnahmeraum (16) aufweist, in dem das zweite Kühllaufrad (7) aufgenommen ist.

6. Elektromotor nach Anspruch 5, **dadurch gekennzeichnet, dass** das zweite Kühllaufrad (7) einen Nabenabschnitt (15) aufweist, der das mindestens eine Antriebswellenlager (13) in axialer Richtung umschließt.

7. Elektromotor nach einem der vorigen Ansprüche 5 oder 6, **dadurch gekennzeichnet, dass** der Aufnahmeraum (16) des Lagerschilds (10) und das zweite Kühllaufrad (7) eine zueinander entsprechende Form aufweisen, so dass ein Axialspalt zwischen dem Lagerschild (10) und dem zweiten Kühllaufrad (7) konstant ist.

8. Elektromotor nach einem der vorigen Ansprüche, **dadurch gekennzeichnet, dass** das zweite Kühllaufrad (7) einen radialen Randabschnitt aufweist, der in axialer Richtung zum Stator (2) hin geneigt ausgebildet ist.

9. Elektromotor nach einem der vorigen Ansprüche, **dadurch gekennzeichnet, dass** das zweite Kühllaufrad (7) einen Außendurchmesser D2 aufweist, der gegenüber einem Statoraußendurchmesser DS des Blechpakets (11) des Stators (2) ausgebildet ist, dass gilt 0,9D2 ≤ DS ≤ 1,1D2.

10. Elektromotor nach einem der vorigen Ansprüche, **dadurch gekennzeichnet, dass** das erste Kühllaufrad (6) einen Außendurchmesser D1 aufweist, der gegenüber einem Rotoraußendurchmesser DR des Rotors (3) ausgebildet ist, dass gilt 0,6D1 ≤ DR ≤ 1,1D1.

11. Elektromotor nach einem der vorigen Ansprüche, **dadurch gekennzeichnet, dass** das zweite Kühllaufrad (7) einen Außendurchmesser D2 aufweist, der gegenüber einem Außendurchmesser D1 des ersten Kühllaufrads (6) ausgebildet ist, dass gilt 0,3D2 ≤ D1 ≤ 0,7D2.

12. Elektromotor nach einem der vorigen Ansprüche, **dadurch gekennzeichnet, dass** die Laufradschaufeln (8) des zweiten Kühllaufrads (7) gegenüber einer Drehrichtung des Elektromotors rückwärtsgekrümmt ausgebildet sind.

## Claims

1. An electric motor (1) formed as an internal rotor motor, for driving a fan having
a stator (2),
a rotor (3),
a drive shaft (4),
motor electronics (5) disposed on a first axial side of the stator (2),
a first cooling impeller (6) which is associated with the motor electronics (5) and disposed on the first axial side of the stator (2) on the drive shaft (4) and generates a first cooling air flow at least to the motor electronics (5) during operation of the electric motor (1), and
a second cooling impeller (7) which is disposed immediately adjacent to windings (12) of the stator (2) on a second axial side of the stator (2) opposite the first axial side and has impeller blades (8) generating a second cooling air flow at least in the axial direction along the stator (2) during operation of the electric motor (1), wherein a bearing of the drive shaft (4) is provided in the axial direction adjacent to the second cooling impeller (7), wherein the bearing comprises at least one drive shaft bearing (13, 14) integrated in an end shield (10), and wherein the end shield (10) extends in the radial direction beyond the stator (2), **characterized in that**
a circumferential outlet gap (18) is formed in the axial direction between the end shield (10) and the laminated cores (11) of the stator (2), via which the second cooling air flow can be conveyed radially outwards during operation of the electric motor (1).

2. The electric motor according to claim 1, **characterized in that** the second cooling impeller (7) is integrally connected to the rotor (3).

3. The electric motor according to claim 1 or 2, **characterized in that** a cooling gap (9) is formed between the stator (2) and the rotor (3) through which the second cooling impeller (7), which is formed as a radial impeller, draws the second cooling air flow.

4. The electric motor according to claim 1, **characterized in that** the supporting is only provided axially on one side opposite the stator (2).

5. The electric motor according to claim 1, **characterized in that** the end shield (10) has a receiving space (16) receiving the second cooling impeller (7).

6. The electric motor according to claim 5, **characterized in that** the second cooling impeller (7) has a hub section (15) enclosing the at least one drive shaft bearing (13) in the axial direction.

7. The electric motor according to any one of the preceding claims 5 or 6, **characterized in that** the receiving space (16) of the end shield (10) and the second cooling impeller (7) have mutually corresponding shapes such that an axial gap between the end shield (10) and the second cooling impeller (7) is constant.

8. The electric motor according to any one of the preceding claims, **characterized in that** the second cooling impeller (7) has a radial edge section which is formed to be inclined in the axial direction towards the stator (2).

9. The electric motor according to any one of the preceding claims, **characterized in that** the second cooling impeller (7) has a diameter D2 which is formed in relation to an outer stator diameter DS of the laminated cores (11) of the stator (2) such that 0.9D2 ≤ DS ≤ 1.1D2.

10. The electric motor according to any one of the preceding claims, **characterized in that** the first cooling impeller (6) has an outer diameter D1 which is formed in relation to an outer rotor diameter DR of the rotor (3) such that 0.6D1 ≤ DR ≤ 1.1D1.

11. The electric motor according to any one of the preceding claims, **characterized in that** the second cooling impeller (7) has an outer diameter D2 which is formed in relation to an outer diameter D1 of the first cooling impeller (6) such that 0.3D2 ≤ D1 ≤ 0.7D2.

12. The electric motor according to any one of the preceding claims, **characterized in that** the impeller blades (8) of the second cooling impeller (7) are formed to be curved backwards.

## Revendications

1. Moteur électrique (1), réalisé sous la forme d'un moteur à induit interne, destiné à entraîner un ventilateur, comprenant
un stator (2),
un rotor (3),
un arbre d'entraînement (4),
une électronique de moteur (5) disposée sur un premier côté axial du stator (2),
une première roue mobile de refroidissement (6) qui est disposée sur l'arbre d'entraînement (4) sur un premier côté axial du stator (2) en étant associée à l'électronique de moteur (5) et produit pendant le fonctionnement du moteur électrique (1) un premier flux d'air de refroidissement au moins en direction de l'électronique de moteur (5), et
une deuxième roue mobile de refroidissement (7) qui est disposée de manière directement adjacente à des enroulements (12) du stator sur un deuxième côté axial du stator (2) qui est opposé au premier côté axial, et qui présente des aubes de roue mobile (8) qui produisent pendant le fonctionnement du moteur électrique (1) un deuxième flux d'air de refroidissement au moins dans une direction axiale le long du stator (2), dans lequel, dans la direction axiale, de manière adjacente à la deuxième roue mobile de refroidissement (7), un palier de l'arbre d'entraînement (4) est prévu, le palier comprenant au moins un palier d'arbre d'entraînement (13, 14) intégré dans un flasque (10), et dans lequel
le flasque (10) s'étend dans la direction radiale jusqu'au-delà du stator (2), **caractérisé en ce que** dans la direction axiale entre le flasque (10) et le paquet de tôles (11) du stator (2), une fente de sortie périphérique (18) est réalisée à travers laquelle le deuxième flux d'air de refroidissement peut être refoulé radialement vers l'extérieur pendant le fonctionnement du moteur électrique (1).

2. Moteur électrique selon la revendication 1, **caractérisé en ce que** la deuxième roue mobile de refroidissement (7) est reliée au rotor (3) d'un seul tenant.

3. Moteur électrique selon la revendication 1 ou 2, **caractérisé en ce qu'**entre le stator (2) et le rotor (3), une fente de refroidissement (9) est réalisée à travers laquelle la deuxième roue mobile de refroidissement (7), réalisée sous forme de roue mobile radiale, aspire le deuxième flux d'air de refroidissement.

4. Moteur électrique selon la revendication 1, **caractérisé en ce que** le palier est prévu exclusivement axialement d'un seul côté par rapport au stator (2).

5. Moteur électrique selon la revendication 1, **caractérisé en ce que** le flasque (10) présente un espace de réception (16) dans lequel est reçue la deuxième roue mobile de refroidissement (7).

6. Moteur électrique selon la revendication 5, **caractérisé en ce que** la deuxième roue mobile de refroidissement (7) présente une partie de moyeu (15) qui entoure ledit au moins un palier d'arbre d'entraînement (13) dans la direction axiale.

7. Moteur électrique selon l'une quelconque des revendications précédentes 5 ou 6, **caractérisé en ce que** l'espace de réception (16) du flasque (10) et la deuxième roue mobile de refroidissement (7) présentent des formes qui correspondent l'une à l'autre de sorte qu'une fente axiale entre le flasque (10) et la deuxième roue mobile de refroidissement (7) est constante.

8. Moteur électrique selon l'une quelconque des revendications précédentes, **caractérisé en ce que** la deuxième roue mobile de refroidissement (7) présente une partie de bord radiale qui est réalisée dans la direction axiale de manière inclinée vers le stator (2).

9. Moteur électrique selon l'une quelconque des revendications précédentes, **caractérisé en ce que** la deuxième roue mobile de refroidissement (7) présente un diamètre extérieur D2 qui est réalisé par rapport à un diamètre extérieur de stator DS du paquet de tôles (11) du stator (2) de telle sorte que 0,9 D2 ≤ DS ≤ 1,1 D2.

10. Moteur électrique selon l'une quelconque des revendications précédentes, **caractérisé en ce que** la première roue mobile de refroidissement (6) présente un diamètre extérieur D1 qui est réalisé par rapport à un diamètre extérieur de rotor DR du rotor (3) de telle sorte que 0,6 D1 ≤ DR ≤ 1,1 D1.

11. Moteur électrique selon l'une quelconque des revendications précédentes, **caractérisé en ce que** la deuxième roue mobile de refroidissement (7) présente un diamètre extérieur D2 qui est réalisé par rapport à un diamètre extérieur D1 de la première roue mobile de refroidissement (6) de telle sorte que 0,3 D2 ≤ D1 ≤ 0,7 D2.

12. Moteur électrique selon l'une quelconque des revendications précédentes, **caractérisé en ce que** les aubes de roue mobile (8) de la deuxième roue mobile de refroidissement (7) sont réalisées de manière recourbée en arrière par rapport à un sens de rotation du moteur électrique.
